Europäisches Patentamt

European Patent Office

Office européen des brevets

(11) Publication number: **0 373 790**
**A2**

## EUROPEAN PATENT APPLICATION

(21) Application number: **89312427.1**

(22) Date of filing: **29.11.89**

(51) Int. Cl.⁵: **G06F 9/46**

The title of the invention has been amended (Guidelines for Examination in the EPO, A-III, 7.3).

(30) Priority: **30.11.88 JP 302456/88**

(43) Date of publication of application:
**20.06.90 Bulletin 90/25**

(84) Designated Contracting States:
**DE FR GB**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Iwasa, Shigeaki c/o Intellectual**
**Prop. Div.**
**K.K. Toshiba 1-1 Shibaura 1-chome**
**Minato-ku Tokyo 105(JP)**
Inventor: **Miyamoto, Yukimasa c/o Intellectual**
**Prop. Div.**
**K.K. Toshiba 1-1 Shibaura 1-chome**
**Minato-ku Tokyo 105(JP)**

(74) Representative: **Freed, Arthur Woolf et al**
**MARKS & CLERK 57-60 Lincoln's Inn Fields**
**London WC2A 3LS(GB)**

(54) **Data processing apparatus for saving and restoring.**

(57) A data processing apparatus has a register cache memory (24), connected between a register file (22) provided in a central processor unit (21) of an electronic calculator and a main memory (23) of the electronic calculator, and constituted by a high-speed memory for performing data exchange therebetween. Register groups in the register file (22) are switched for each task, and register contents are saved/restored. The contents of a register group which may be used next are saved to the cache memory (24) upon saving of the register contents, and corresponding data is restored from the cache memory (24) to the register group which may be used next upon restoring of the register contents.

F I G. 1

# Data processing apparatus

The present invention relates to a data processing apparatus for saving/restoring the contents of a register file.

Recently, as data processing techniques have progressed, the types of tasks to be processed by electronic calculators have been increased in number. In order to efficiently perform processing for various types of needs, a multitask system has been developed. In this multitask system, task switching must be performed, e.g., every several milliseconds. Upon task switching, current task contents of a register file of a CPU must be saved in a main memory, and information of the next task must be restored in the register file of the CPU.

In addition, a register saving/restoring operation is frequently performed by a subroutine call and a subroutine return even in a single task.

Furthermore, if a back track occurs during unification in a Prolog machine, a calculator environment must be returned to the closest choice point passed before occurrence of the back track. Especially in nondeterministic syllogism logic processing such as Prolog, such a choice point and a back track are frequently repeated.

As described above, in the field of electronic calculators, saving/restoring of register contents is frequently repeated, and data transfer must be performed between a register file and a memory each time saving/restoring is performed. Therefore, an execution efficiency of a CPU is decreased by an execution time of the CPU required for this data transfer.

In order to reduce such an overhead of a CPU, a register window system is proposed. In this system, when task switching or a subroutine call is generated, a pointer of a register is changed to switch registers to be used. In this manner, imaginary data saving/restoring can be performed without saving/restoring the contents of the register with respect to a memory.

In this system, however, if all the windows are used up, the contents of a used window are saved to the memory and then the window is used. For this reason, data transfer must be performed between the register and the memory in order to save the window contents, thereby decreasing a processing efficiency of a CPU.

As described above, in the conventional data processing systems, since register contents are saved/restored with respect to a memory each time task switching, a subroutine call, or a choice point occurs, an execution efficiency of a CPU is decreased.

It is an object of the present invention to provide a data processing apparatus capable of saving/restoring data without increasing a load on a CPU, thereby increasing an execution efficiency of the CPU.

According to the present invention, a cache memory constituted by a high-speed memory is inserted between a register file provided in a central processor unit (CPU) of an electronic calculator and a main memory of the electronic calculator to exchange data therebetween. Therefore, while registers to be used in the register file are switched to save/restore the register contents, the following operation is performed independently of the CPU. That is, the contents of registers which may be used next are saved in the cache memory upon saving of register contents, and the corresponding data is restored from the cache memory to the registers which may be used next upon restoring of the register contents.

According to the present invention, since register saving/restoring is performed basically in accordance with switching of registers to be used, i.e., the register window system, the register contents need not be transferred to the memory until the register file becomes full. A controller which operates independently of the CPU saves the contents of registers which may be used next in the cache memory upon saving of the register contents, and restores the corresponding data from the cache memory to the registers which may be used next upon restoring of the register contents, thereby preparing for switching of the next registers. At this time, data transfer between the register file and the cache memory can be performed in, e.g., one cycle since the cache memory is a high-speed memory. In addition, since data transfer is performed independently of the CPU, no load is applied on the CPU. Therefore, an execution efficiency of the CPU can be sufficiently increased.

This invention can be more fully understood from the following detailed description when taken in conjunction with the accompanying drawings, in which:

Fig. 1 is a block diagram showing a data processing apparatus according to an embodiment of the present embodiment;

Fig. 2 is a view showing a format of a register file in the apparatus;

Fig. 3 is a view showing a format of a cache memory in the apparatus;

Fig. 4 is a flow chart for explaining a block switching operation in the apparatus;

Fig. 5 is a view showing a manner in which block switching is performed in the apparatus;

Fig. 6 is a flow chart for explaining a task switching operation in the apparatus; and

Figs. 7A and 7B are views showing a manner in which window switching is performed.

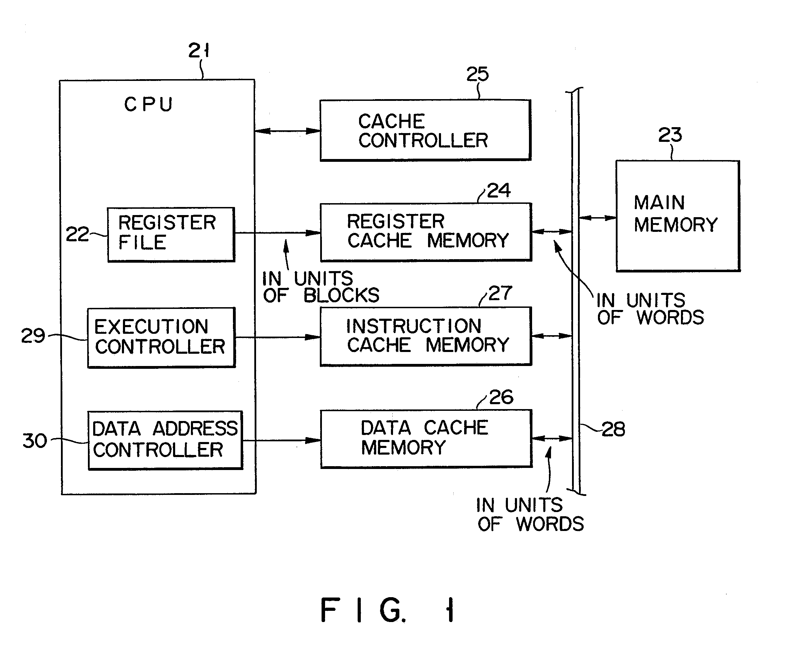

According to a calculator system which comprises a data processing apparatus shown in Fig. 1 and can perform multitask processing, a CPU 21 for executing various types of tasks includes a register file 22. A register cache memory 24 is inserted between the register file 22 and a main memory 23 for storing various types of program information and task information. Data transfer between the cache memory 24, the register file 22, and the main memory 23 is controlled by a cache controller 25. This system also comprises a data cache memory 26 for temporarily storing data to be processed and processed data, an instruction cache memory 27 for storing instruction information, a data buse 28, between the CPU 21 and the main memory 23.

An execution controller 29 is coupled to the instruction cache memory, to recognize the command stored therein and execute the command. A data access controller 30 is coupled to the data cache memory 26 for access-controlling it, to transfer the data stored in the main memory 23 thereto.

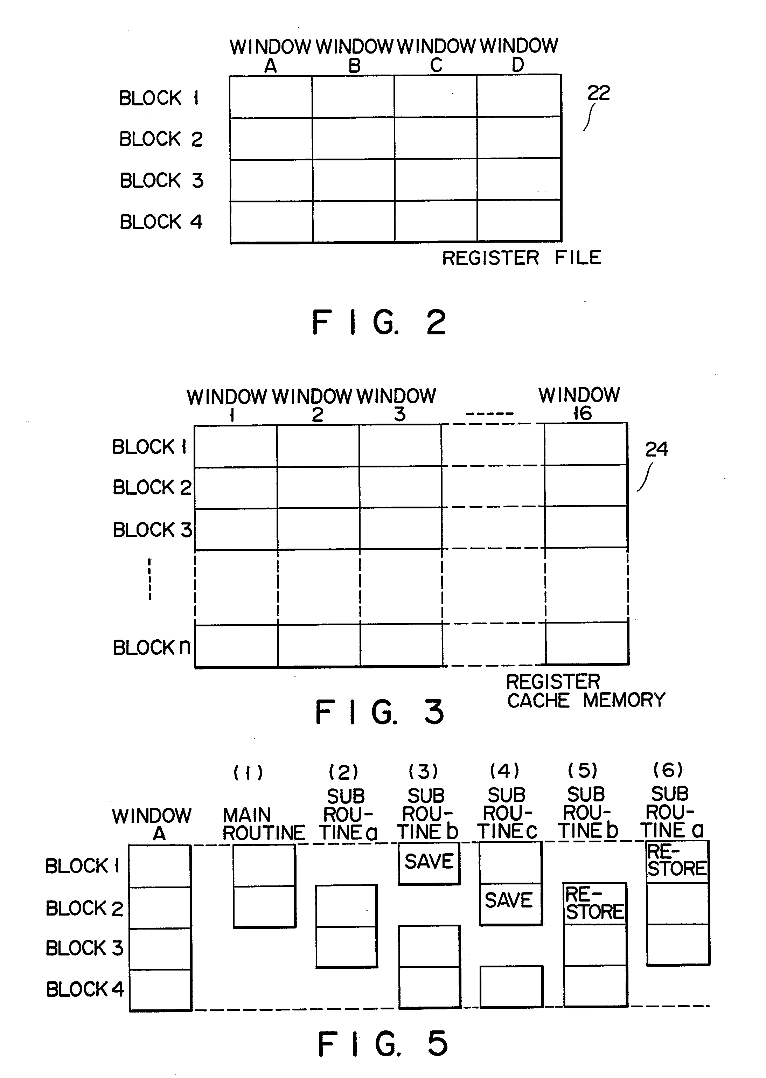

According to the format of the register file 22 shown in Fig. 2, the file 22 is divided into, for example, $4 \times 4 = 16$ subfiles, four windows A to D are arranged in the row direction, and four blocks 1 to 4 are arranged in the column direction, in this embodiment. One register window (including four subfiles, in this example) is assigned to one task. Each of the windows A to D includes four blocks 1 to 4, and each block is constituted by eight registers. In this arrangement, two adjacent blocks (e.g., 16 registers) in one window can be used at the same time. Therefore, if the window A, for example, is assigned to one task, the blocks 1 and 2 of the window A are used first. If a subroutine call is generated during execution of this task, blocks to be used are switched to the blocks 2 and 3. If a plurality of subroutine calls are generated, the blocks to be used are sequentially switched to the blocks 3 and 4, the blocks 4 and 1, the blocks 1 and 2, ... If a subroutine return is generated, the blocks to be used are reversely switched to the blocks 4 and 1, the blocks 3 and 4, the blocks 2 and 3, ... If task switching is requested, a register window assigned to the next task is used. A register window to be used is determined by an operating system and so on.

The register cache memory 24 is a high-speed memory for saving/restoring data of one block in the register file 22 in one cycle in accordance with an instruction from the cache controller 25. The cache memory 24 is also used to save one window for a task into the main memory 23 in accordance with an instruction from the controller 25, and to restore the saved window from the main memory 23 if necessary. For example, the register cache memory 24 has a format as shown in Fig. 3. That is, the memory 24 has 16 register windows which can be stored, and each window can store $n$ blocks. This block number $n$ is preferably large enough to cope with a large number of subroutine calls. Each block has a capacity (e.g., a capacity corresponding to eight registers) capable of storing all the contents of each block of the register file 22.

The controller 5 controls data flows between the register file 22 and the cache memory 24 and between the cache memory 24 and the main memory 23, and manages data in the register file 22 and the cache memory 24. Although the controller 25 receives information such as a subroutine call, a return request, and a task switching request from the CPU 21, it operates independently of the CPU 21.

An operation of the controller 25 performed in the system having the above arrangement when a subroutine call and a return request are generated in one task will be described below.

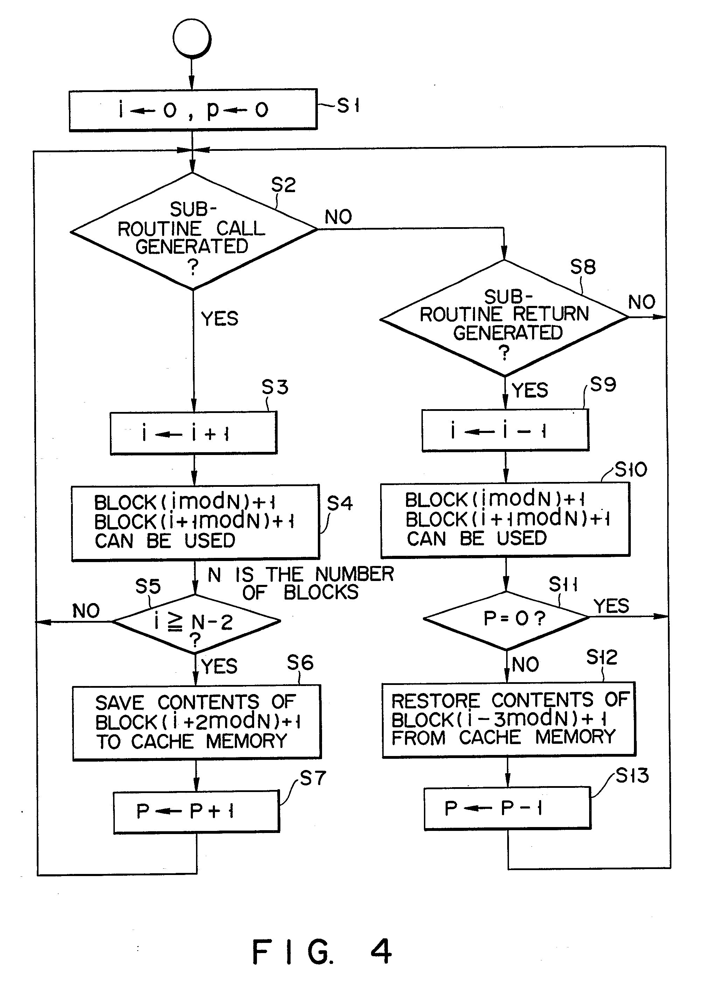

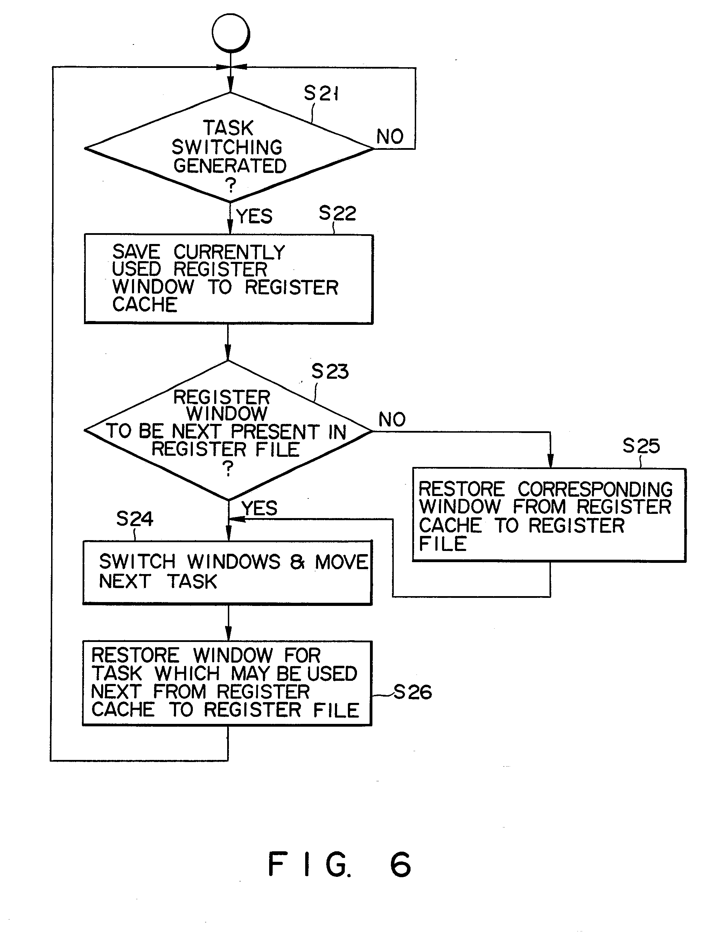

As shown in a flow chart of data transfer control shown in Fig. 4, a variable $i$ representing the depth of a subroutine and a variable P representing the number of blocks to be saved to the cache memory 24 are set to be "0" (S1). In this state, assume that the blocks 1 and 2 of the window A in the register file 22 are used for a main routine as indicated by (1) in Fig. 5. If a subroutine call is generated (S2), $i$ is incremented to be "1" (S3), blocks to be used are switched to the blocks 2 and 3 as indicated by (2) in Fig. 5 (S4), and a subroutine a is executed. At this time, data exchange can be performed between the main routine and the subroutine a by the registers of the block 2 common to them. Register values obtained in the main routine remain in the block 1. If a subroutine call is further generated (S2), $i = 2$ is obtained (S3), and the blocks to be used are switched to the blocks 3 and 4 as indicated by (3) in Fig. 5 (S4). At this time, the block 1 storing the register contents of the main routine is a block which may be used by the next subroutine call. Therefore, the register contents of the block 1 must be saved beforehand. The controller 25 checks the necessity of saving of such register contents by checking whether $i$ is N - 2 (in this case, 2) or more (S5). If the controller 25 determines that saving is necessary, it saves the contents of the block 1 to the cache memory 24 as indicated by (3) in Fig. 5 (S6), and updates P to P = 1 (S7). In this manner, information representing that the data of one block is saved is stored. If a subroutine call is further generated, the blocks to be used are switched to the block 4 and the saved block 1, and the contents of the block 2 which may be used next are saved, as indicated by (4) in Fig. 5. At this time, $i = 3$ and $P = 2$ are obtained.

If a subroutine return is subsequently generated (S8), i = 2 is obtained (S9), and the blocks to be used are switched to the blocks 3 and 4 as indicated by (5) in Fig. 5 (S10). Since P = 2 (S11), data not restored to the register file 22 remains in the cache memory 4. In this case, since the block 2 is a block which may be used by the next subroutine return, the contents of the block 2 are restored from the cache memory 24 to the register file 22 as indicated by (5) in Fig. 5 (S12). Upon restoring, the saving number P with respect to the register is decremented by "1" to P = 1 (S13). The block 1 which may be used by the next subroutine call has been already used, so that it needs not be saved to the cache memory 24. In this embodiment, the contents of the block 2 remain unchanged, so that it may be assumed that the above restoring need not be performed. However, since the contents of the block 2 are often destructed by a deeper subroutine nesting, the restoring is performed. If a subroutine return is subsequently generated, the blocks to be used are switched to the block 3 and the restored block 2 as indicated by (6) in Fig. 5. Therefore, the block 1 is restored from the cache memory 24 to the register file 22.

An operation of the controller 25 performed when a task switching request is generated will be described below with reference to a flow chart shown in Fig. 6.

If a task switching request is generated while the window A is used (S21), a register window for the next task is searched from the currently nonused windows B, C, and D, a window to be used is switched to a window for the next task, and the switched window is used. At this time, the controller 25 saves all of the two currently used blocks and nonsaved blocks of the window A to the cache memory 24 on the basis of the variables i and P described above (S22). Before this task, the controller 25 receives information from the operating system, and restores data of a register window for the task, which may be mostly executed when the next task switching request is generated, to another window. In step S23, the controller 25 checks whether a register window to be used next is present in the register file 22. If YES in step S23, the register window is switched to the window to be used next in the register file and the next task is executed (S24). If NO in step S23, the corresponding window is restored from the cache memory 24 to the register file (S25), and then the flow advances to step S24.

After step S24, a window for a task which may be executed next is restored from the cache memory 24 to the register file 22 (S26). Thereafter, the flow returns to step S21. In this manner, task switching is performed.

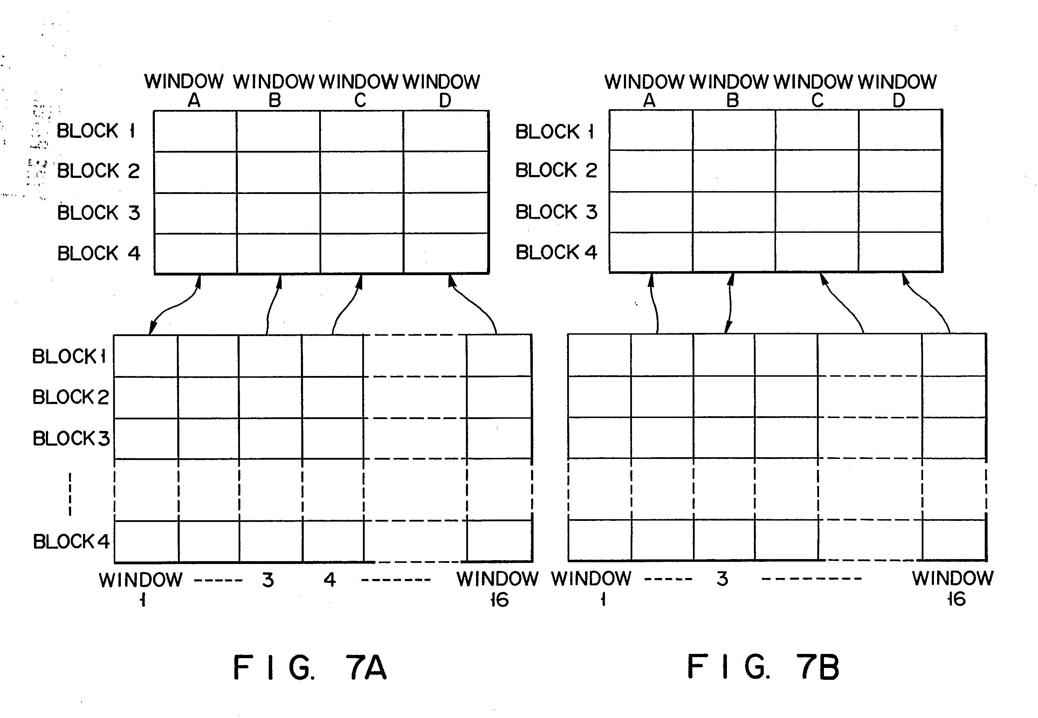

A window data saving/restoring operation will be described below with reference to Figs. 7A and 7B.

Referring to Fig. 7A, if window data which may be used next is stored in the windows 3, 4, and 16 of the cache memory 24 while the window A is currently used, these data are restored to the windows B, C, and D, respectively. When a window switching occurs, data in the window A is stored in, e.g., the window 1. At this time, the data saved from the register file 22 is stacked in the blocks of each window of the cache memory 24. Subsequently, if a window to be used is switched to the window B by a task switching as shown in Fig. 7B, the windows A, C, and D are written with window data which may be used next. In this manner, this system can cope with task switching.

The cache memory 24 need only store data of a register window for a currently executing task and data of a register window for a task which may be executed next. Therefore, on the basis of information from the operating system, the controller 25 saves unnecessary register window data to the main memory 23, and restores data which may be used next from the main memory 23 to the cache memory 24. In this case, data transfer between the memories 23 and 24 can be performed in accordance with memory access procedures similar to normal memory access procedures performed by the controller 25.

The above operation is performed when a subroutine call or task switching occurs. A similar means, however, can be applied when a choice point or back track is generated in Prolog. In the above embodiment, saving/restoring is performed between the register file and the cache memory for both blocks and windows. Effects of the present invention, however, can be similarly obtained when saving/restoring is performed for only blocks or windows.

According to the present invention as described above, in the register saving/restoring system based on the register window system, since register contents which may be used next after register saving/restoring are saved/restored to/from the cache memory at high speed independently of the CPU, no time is required for the CPU to perform register saving/restoring. Therefore, when register saving/restoring is frequently performed especially in multitask processing or Prolog, an execution efficiency of the CPU can be largely increased.

## Claims

1. A data processing apparatus characterized by comprising:
main memory means (23) for storing various types of program information and data information;

a central processor unit (21) for executing various types of tasks in accordance with the information stored in said main memory means, and having register file means (22) having a plurality of register groups each for storing a plurality of data corresponding to a plurality of tasks; and

control means (25) for switching said register groups of said register file for each task.

2. An apparatus according to claim 1, characterized by further comprising register cache memory means (24), inserted between said register file means and said main memory means, for exchanging data therebetween,

wherein said control means (25) operates independently of said central processor unit (21), saves the data of said register group to said cache memory means (24) upon task switching, and restores the data to said register group via said cache memory means.

3. An apparatus according to claim 1, characterized in that said register file means (22) includes the register groups which are two-dimensionally arranged.

4. An apparatus according to claim 1, characterized in that said control means (25) switches said register groups upon each predetermined time period.

5. An apparatus according to claim 1, characterized in that said register file means (22) has a format corresponding to a format of said cache memory means (24).

6. A data processing apparatus comprising:

main memory means (23) for storing various types of program data and various types of task data;

a central processor unit (21) for processing various tasks in accordance with the stored data in said main memory means (23), and having register file means (22) having a plurality of register groups for selectively storing the task data;

cache memory means (24), inserted between said register file and said main memory means, for exchanging data therebetween; and

saving/restoring means (25) operating independently of said central processor unit (21), for saving data in said register file to said cache memory means, and for restoring data to be restored to said register file means to a corresponding one of said register groups via said cache memory means.

7. An apparatus according to claim 6, characterized in that said cache memory means (24) has a plurality of register groups, each of said register groups of said register file means (22) and said cache memory means (24) including a plurality of register subgroups each for storing a plurality of subroutines.

8. An apparatus according to claim 7, characterized in that said cache memory means (24) saves and restores data of one of said register subgroup of said register file means (22) in one cycle, saves data of one of said register group to said main memory means, and if necessary, restores the data of said one of said register group from said main memory means, in accordance with an instruction from said control means.

9. An apparatus according to claim 7, characterized in that each of said register subgroups of said cache memory means (24) has a capacity capable of storing data to be stored in said register subgroup of said register file means.

10. An apparatus according to claim 6, characterized in that said central processor unit (21) generates instruction information including a subroutine call, a return request, and a task switching request, and said control means (25) controls data flows between said register file means (22) and said cache memory means (24) and between said cache memory means (24) and said main memory means (23), and manages data in said register file means and said cache memory means, in accordance with the instruction information.

F I G. 1

WINDOW WINDOW WINDOW WINDOW
A        B        C        D

BLOCK 1

BLOCK 2

BLOCK 3

BLOCK 4

22

REGISTER FILE

# F I G.  2

WINDOW WINDOW WINDOW        WINDOW
1        2        3   -----   16

BLOCK 1

BLOCK 2

BLOCK 3

BLOCK n

24

REGISTER
CACHE MEMORY

# F I G.  3

|  | (1) | (2) SUB ROU-TINE a | (3) SUB ROU-TINE b | (4) SUB ROU-TINE c | (5) SUB ROU-TINE b | (6) SUB ROU-TINE a |
|---|---|---|---|---|---|---|
| WINDOW A | MAIN ROUTINE |  |  |  |  |  |

BLOCK 1          SAVE                    RE-STORE

BLOCK 2                            SAVE    RE-STORE

BLOCK 3

BLOCK 4

# F I G.  5

F I G. 4

S21

TASK SWITCHING GENERATED ? — NO

YES

S22

SAVE CURRENTLY USED REGISTER WINDOW TO REGISTER CACHE

S23

REGISTER WINDOW TO BE NEXT PRESENT IN REGISTER FILE ? — NO

YES

S24

SWITCH WINDOWS & MOVE NEXT TASK

S25

RESTORE CORRESPONDING WINDOW FROM REGISTER CACHE TO REGISTER FILE

RESTORE WINDOW FOR TASK WHICH MAY BE USED NEXT FROM REGISTER CACHE TO REGISTER FILE — S26

F I G. 6

WINDOW WINDOW WINDOW WINDOW
A        B        C        D

BLOCK 1
BLOCK 2
BLOCK 3
BLOCK 4

BLOCK 1
BLOCK 2
BLOCK 3

BLOCK 4

WINDOW ----- 3    4 -------- WINDOW
1                            16

F I G. 7A

WINDOW WINDOW WINDOW WINDOW
A        B        C        D

BLOCK 1
BLOCK 2
BLOCK 3
BLOCK 4

WINDOW ----- 3 -------- WINDOW
1                       16

F I G. 7B

EP 0 373 790 A2